Europäisches Patentamt

European Patent Office

Office européen des brevets

(11) Publication number: **0 129 393**
**B1**

# (12) EUROPEAN PATENT SPECIFICATION

(45) Date of publication of patent specification: 09.09.87

(51) Int. Cl.⁴: **H 04 N 9/79**

(21) Application number: **84303955.3**

(22) Date of filing: **12.06.84**

(54) Video signal generating apparatus.

(30) Priority: **13.06.83 JP 105385/83**

(43) Date of publication of application:
**27.12.84 Bulletin 84/52**

(45) Publication of the grant of the patent:
**09.09.87 Bulletin 87/37**

(84) Designated Contracting States:
**AT DE FR GB NL**

(56) References cited:
**DE-A-3 239 404**
**US-A-2 892 015**
**US-A-4 339 775**

(73) Proprietor: **SONY CORPORATION**
**7-35 Kitashinagawa 6-Chome Shinagawa-ku**
**Tokyo 141 (JP)**

(72) Inventor: **Yamaji, Kazunori c/o Sony**
**Corporation**
**Patents Division 7-35 Kitashinagawa 6-chome**
**Shinagawa-ku Tokyo (JP)**
Inventor: **Nakamura, Takashi c/o Sony**
**Corporation**
**Patents Division 7-35 Kitashinagawa 6-chome**
**Shinagawa-ku Tokyo (JP)**
Inventor: **Kihara, Taku c/o Sony Corporation**
**Patents Division 7-35 Kitashinagawa 6-chome**
**Shinagawa-ku Tokyo (JP)**

(74) Representative: **Cotter, Ivan John et al**
**D. YOUNG & CO. 10 Staple Inn**
**London WC1V 7RD (GB)**

Courier Press, Leamington Spa, England.

# Description

This invention relates to video signal generating apparatus. More particularly, but not exclusively, the invention relates to video signal generating apparatus capable of generating a video signal which is suitable for being recorded on a video tape recorder (VTR) used in a high speed video system in which an object moving at high speed is picked up by a television camera and an output of the camera is recorded on the VTR.

It is known to use a high speed film camera to pick up and to record an object moving at high speed. The high speed film camera is, however, subject to the defect that an object moving at high speed, which has been picked up and recorded by the camera, cannot be reproduced immediately. To remove the above defect, various researches and developments have been made in which an object moving at high speed is picked up by a television camera, recorded by a video tape recorder (VTR) or the like, and then reproduced immediately.

As is well known, it takes at least 1/60 of a second for an ordinary television camera to convert a single picture (one field) to an electrical signal. Therefore, it is impossible for the television camera to pick up an object which moves so fast that its image changes at a speed greater than 1/60 of a second.

To solve this problem, a technique is disclosed in, for example, the published specification of Japanese Patent Application (examined) No. 26416/1977 in which the visual field of an image pickup tube is divided into a plurality of sections, the whole of an object is placed in each one of the sections and the object image on the image pickup tube is scanned during a scanning period of time corresponding to each section to thereby enable an object moving at high speed to be picked up.

Further, in the published specification of Japanese Patent Application (examined) No. 13631/1980 there is disclosed a technique in which an optical image of an object is sequentially projected onto a plurality of image pickup tubes having an accumulation effect at every constant interval during a constant time period, and the picked-up video signals from the respective image pickup tubes are respectively supplied to a plurality of recording apparatuses to thereby successively record the time image of an object moving at high speed.

However, according to the technique disclosed in the published specification of Japanese Patent Application (examined) No. 26416/1977, since the visual field is substantially narrowed, only the image of the periphery of the moving object is obtained. Also, since the movable range of the moving object is confined within the area of the one divided section, this technique is not suitable for general use. Moreover, according to the technique disclosed in the published specification of Japanese Patent Application (examined) No. 13631/1980, since a plurality of image pick-up elements, each having an accumulation effect, and a plurality of recording apparatuses are required, the arrangement thereof becomes complicated, which results in significant inconvenience in practical use.

In addition, apart from the above techniques, consideration could be given to a technique in which a video signal picked up by a television camera at a scanning speed which is $N$ (N is an integer equal to 2 or more) times higher than the ordinary or normal scanning speed, namely the scanning speed for obtaining a standard television signal, is directly recorded by using a VTR. In this case, however, since the high speed video signal picked up by the television camera having the scanning speed equal to N times the ordinary or normal scanning speed is recorded with the high speed remaining as it is, the recording band must be increased to N times the normal recording band. As a result, the speed of revolution of a rotary head of the VTR must be increased to N times the normal speed of revolution, a carrier frequency of FM modulation (frequency modulation) for the video signal must be increased to N times the normal carrier frequency, and signal processing in the base band must have a characteristic which is N times the normal characteristic. Further, in order to establish compatibility by making the angle of inclination of the recorded track or the like comply with the normal recorded pattern, the tape transport speed must be increased to N times the normal tape transport speed.

When a video signal recorded as described above at a speed N times the normal speed is reproduced by a VTR having the normal speed of revolution of the rotary head and the normal tape transport speed, the object moving at high speed can be visually perceived. However, it becomes quite difficult to ensure satisfactory characteristics of the recording and reproducing circuitry, such as the corresponding relationship between the emphasis upon recording and the de-emphasis upon reproducing, and the stability of the frequency of the frequency-modulated signal, etc. Even if the signal processed in the base band which is N times the normal base band upon recording is processed in a time of 1/N upon reproducing, it is quite difficult to ensure that the various characteristics are satisfactory. Moreover, when the carrier frequency of the FM modulation for the recording signal becomes N times the carrier frequency of the normal VTR, the impedance of the rotary head, the characteristic of a rotary transformer and the like cause serious problems so that, in practice, it becomes impossible to construct a system having a large value of N.

Furthermore, if the speed of revolution of the rotary head is changed between the recording mode and the reproducing mode, a so-called air film layer between the rotary head drum and the tape is changed in thickness. As a result, the tracing condition of the head on the tape is made different and, also, the contact pressure of the head on the tape is changed so that the reproducing sensitivity may be lowered.

A high speed video signal can be obtained by delaying each output from a television camera having the normal standard scanning speed by a predetermined timing. However, this technique is subject to the defects that the number of pieces of video equipment operating at normal speed is increased and that a mechanism having a complicated arrangement is required.

According to the present invention there is provided a video signal generating apparatus, having a video camera which has a higher scanning speed than that of a standard video camera, for generating a prior standard television video signal, the apparatus comprising:

a) means for dividing a video signal from said video camera into a plurality of channel video signals;

b) means for expanding a time axis of the channel video signals;

c) means for combining the time axis expanded channel video signals for producing a plurality of composite video signals so that each of the composite video signals has a bandwidth similar to that of the prior standard television video signal; and

d) means for supplying a reference signal to the combining means so that each of the composite video signals has a colour framing sequence which is the same as that of the prior standard television video signal.

Video signal generating apparatus embodying the present invention and described hereinbelow is capable of processing a signal obtained from a video camera, the scanning speed of which is higher than the normal scanning speed, in the same way as a signal obtained from a television camera having a normal scanning speed. The video signal generated by the apparatus is suitable for being recorded on a video tape recorder (VTR) used in a video system in which an object is picked up by the high speed scanning television camera and the output thus picked up is recorded on the VTR.

The invention will now be further described, by way of illustrative and non-limiting example, with reference to the accompanying drawings, in which like references designate like elements and parts throughout, and in which:

Figure 1 is a block diagram of a video signal generating apparatus embodying the present invention;

Figure 2 is a block diagram of a speed converting circuit of the video signal generating apparatus shown in Figure 1;

Figure 3A to 3M are respective timing charts useful for explaining the operation of the video signal generating apparatus;

Figures 4 and 5 are respective diagrams useful for explaining the output modes of a plurality of channels in the video signal generating apparatus;

Figures 6 and 7 are respective diagrams useful for explaining an example of a video tape recorder (VTR) which can be used to record a signal obtained from the video signal generating apparatus; and

Figure 8 is a diagram useful for explaining the output modes of a plurality of channels in another video signal generating apparatus embodying the present invention.

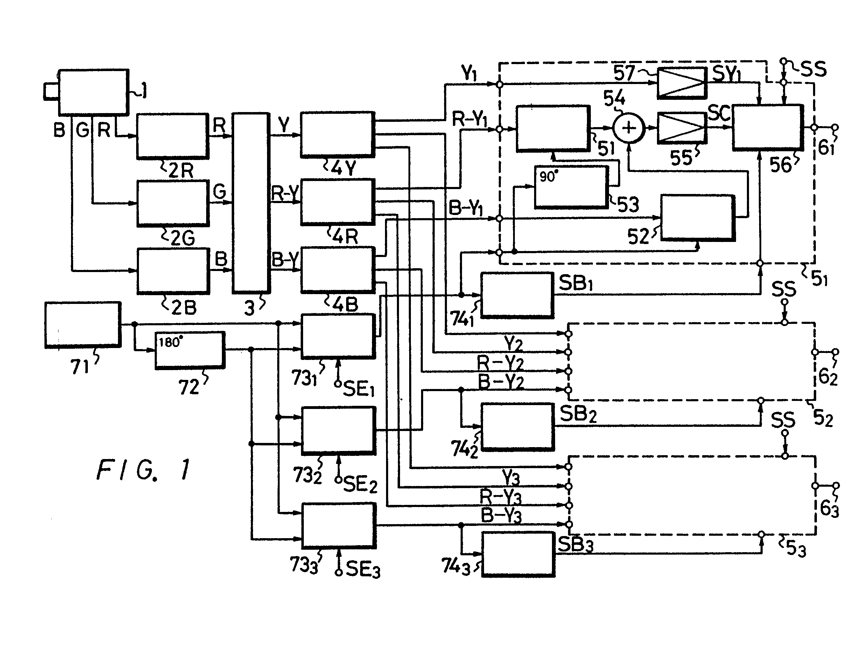

Figure 1 is a block diagram showing the circuit arrangement of a video signal generating apparatus embodying the present invention. Figure 1 shows a colour video camera 1 having, for example, three image pick-up tubes, the camera being operated at a scanning speed which is N times the ordinary scanning speed, that is the scanning speed of an ordinary or standard video camera. In this embodiment, the colour video camera 1 is operated at a scanning speed which is, for example, three times the ordinary scanning speed so that each of red, green and blue primary colour signals from the camera 1 has a frequency band three times that of the colour signals from an ordinary or standard colour video camera with the ordinary scanning speed. Since the band of the output from the ordinary colour video camera is about 6 MHz, the band of the output signal from the colour video camera 1 is 18MHz or more. Moreover, since the scanning speed of the colour video camera 1 is three times the scanning speed of the ordinary colour video camera, then during one field period of a standard television signal, or during the period of 1/60 of a second in the case of the NTSC system colour video signal, the output signal from the camera 1 comprises a video signal of 3 fields.

The three primary colour signals R, G and B from the colour video camea 1 are supplied through respective preamplifiers 2R, 2G and 2B to a matrix circuit 3 which produces a luminance signal Y and red and blue colour difference signals R−Y and B−Y, which are supplied to respective speed converting circuits 4Y, 4R and 4B. The speed converting circuits 4Y, 4R and 4B are each operative to convert a high speed signal of a speed which is three times the ordinary speed into a signal of the ordinary speed. Since the speed converting circuits 4Y, 4R and 4B are constructed to be exactly the same as one another, the speed converting circuit 4Y will now be described by way of example and the others will not be described.

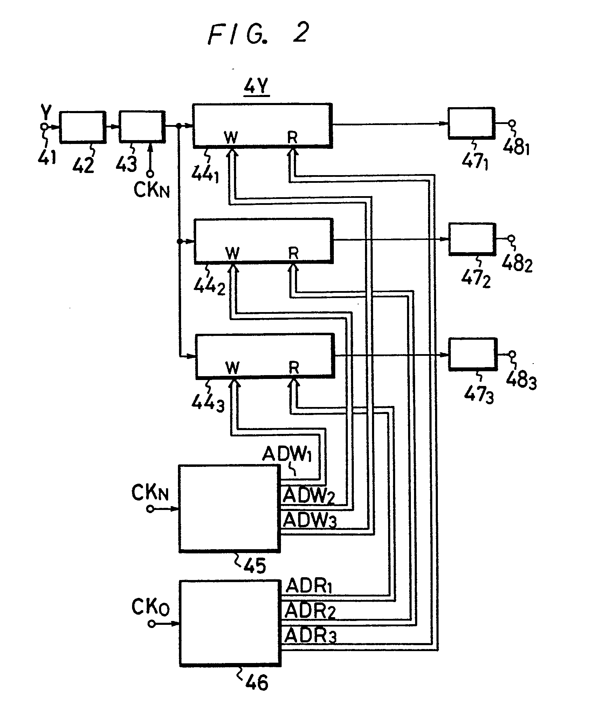

Figure 2 is a block diagram showing the speed converting circuit 4Y. The luminance signal Y is applied to an input terminal 41, from which it is supplied through a low-pass filter 42 to an analog-to-digital (A/D) converting circuit 43. The low-pass filter 42 serves to restrict the signal band and is made to have such a filtering characteristic as to pass therethrough signals of 20 MHz or below in this embodiment. In the A/D converting circuit 43, the luminance signal Y is sampled at a speed three times that of a case in which an output luminance signal from the colour video camera having the ordinary scanning speed is sampled. The sampling rate of the normal video signal is, for example, 14.3 MHz (4 fsc) or about 13.5 MHz in consideration of a colour subcarrier frequency fsc because the frequency band of the normal video signal is about 6 MHz. The sampling rate of the A/D converting circuit 43 in this embodiment is three times the normal sampling rate and is therefore selected to be about 42.9 MHz or 40.5 MHz.

Assume that, in this embodiment, the sampling rate is selected to be 40.5 MHz. A clock signal $CK_N$ of 40.5 MHz is supplied to the A/D converting circuit 43, whereby the luminance signal Y is converted to a digital signal of, for example, 8 bits per sample.

In practice, the speed converting circuit 4Y includes N (namely 3, in this embodiment) field memory circuits, each of which has a capacity of one field. The high speed video signal is sequentially written into the 3 field memory circuits by an amount of one field and the high speed video signals thus written are read out as 3 channels in parallel from the 3 field memory circuits at $\frac{1}{3}$ of the sampling rate to be converted to the video signal of ordinary speed.

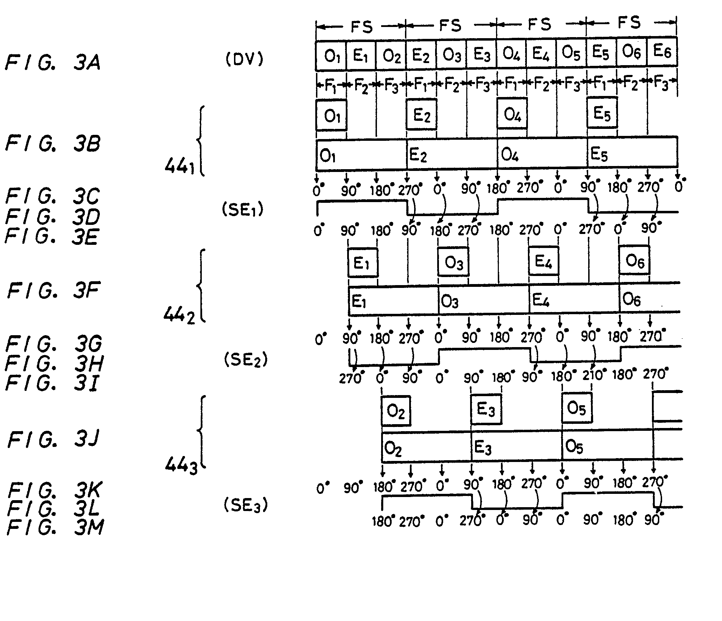

Reference numerals $44_1$, $44_2$ and $44_3$ respectively designate the field memories, each having a capacity of one field, to which the high speed digital luminance signal from the A/D converting circuit 43 is supplied. Write address signals $ADW_1$, $ADW_2$ and $ADW_3$ from a write address setting circuit 45 are supplied to the field memories $44_1$, $44_2$ and $44_3$, respectively. Also, read address signals $ADR_1$, $ADR_2$ and $ADR_3$ from a read address signal setting circuit 46 are supplied to the field memories $44_1$, $44_2$ and $44_3$, respectively. The write address signal setting circuit 45 is supplied with the clock signal $CK_N$ of 40.5 MHz, which is three times the ordinary speed, and thus forms the write address signals $ADW_1$ to $ADW_3$, each of which changes at a speed which is three times the ordinary speed. On the other hand, the read address setting circuit 46 is suplied with a clock signal $CK_0$ of ordinary speed, that is 13.5 MHz, and thus forms the address signals $ADR_1$ to $ADR_3$ which change at the ordinary speed. The memory access operation of the field memories $44_1$, $44_2$ and $44_3$ is such that writing-in and reading-out are carried out in a time sharing manner so that writing-in and reading-out apparently can be performed simultaneously. As shown in Figure 3, the high speed digital luminance signal DV (see Figure 3A) is sequentially written into the field memories $44_1$, $44_2$ and $44_3$ by one-field amounts in response to the write signals from the write address setting circuit 45. Since the high speed digital luminance signal has a speed three times the normal speed, as will be clear from Figures 3B, 3F and 3J, the write timing thereof is delayed by $\frac{1}{3}$ of one field period FS of the television signal of normal speed. The delay of the write timing is realised by sequentially switching the memories $44_1$, $44_2$ and $44_3$ at every $\frac{1}{3}$ period $F_1$, $F_2$ and $F_3$ in, for example, one field FS. To this end, in the write address setting circuit 45 the same address is repeatedly set in each $\frac{1}{3}$

period of $F_1$, $F_2$ and $F_3$. Therefore, it may be possible that, since the address signals $ADW_1$, $ADW_2$ and $ADW_3$ are the same, a common address signal is used for the three field memories $44_1$ to $44_3$ and the write periods of the three field memories $44_1$ to $44_3$ are switched as mentioned before. As shown in Figures 3B, 3F and 3J, an odd field signal $O_1$ of the high speed television signal is written into the field memory $44_1$ during the first $\frac{1}{3}$ period F1 in the period FS, while, during the next $\frac{1}{3}$ period F2, an even field signal $E_1$ of the high speed video signal is written into the field memory $44_2$. And, during the $\frac{1}{3}$ period F3 next to the $\frac{1}{3}$ period F2, a video signal $O_2$ of the next odd field of the high speed video signal is written into the field memory $44_3$. This signal processing is thereafter repeated in turn.

Then, at the same time as the high speed video signal is written into the field memories $44_1$ to $44_3$, the signal written therein is instantaneously read out in turn from each field memory at a speed which is $\frac{1}{3}$ of the speed used for writing. Accordingly, the read address signals $ADR_1$, $ADR_2$ and $ADR_3$ supplied from the read address setting circuit 46 to the field memories $44_1$, $44_2$ and $44_3$ are such that the same address data is supplied after having been delayed by the period of $\frac{1}{3}$ of the field period FS. Therefore, as shown in Figures 3B, 3F and 3J, the signals read out from the field memories $44_1$, $44_2$ and $44_3$ are respectively delayed by $\frac{1}{3}$ of the field period FS. The digital luminance signals of 3 channels read out in parallel are converted to the original analog luminance signals by digital-to-analog (D/A) converting circuits $47_1$, $47_2$ and $47_3$ and then led out to output terminals $48_1$, $48_2$ and $48_3$, respectively.

Thus, from the speed converting circuits 4Y, 4R and 4B, the high speed luminance signal Y and red and blue colour difference signals R−Y and B−Y are respectively obtained as 3 channels of luminance signals $Y_1$, $Y_2$ and $Y_3$ of normal speed and 3 channels of red and blue colour difference signals R−$Y_1$, R−$Y_2$ and R−$Y_3$ and B−$Y_1$, B−$Y_2$ and B−$Y_3$ of normal speed, as shown in Figure 1. The colour difference signals from the circuits 4R and 4B are signals with frequencies lower than the frequency bands of the luminance signals and narrow frequency bands of, for example, 1.2 MHz or below, as is usual.

The luminance signal $Y_1$ and the red and blue colour difference signals R−$Y_1$ and B−$Y_1$ of the first channel are supplied to a first channel encoder $5_1$, the luminance signal $Y_2$ and the red and blue colour difference signals R−$Y_2$ and B−$Y_2$ of the second channel are supplied to a second channel encoder $5_2$, and the luminance signal $Y_3$ and the red and blue colour difference signals R−$Y_3$ and B−$Y_3$ of the third channel are supplied to a third channel encoder $5_3$. The encoders $5_1$, $5_2$ and $5_3$ of the respective channels produce respective NTSC composite colour video signals at output terminals $6_1$, $6_2$ and $6_3$ thereof, as will be described hereinbelow.

Since the signal of each of the 3 parallel channels is obtained at every unit of one field as mentioned above, as, for example, shown in Figure 3A, a video signal of one field at the first field in the high speed video signals of 3 fields read out during the one field period FS is developed at the output terminal $6_1$ as the first channel signal, a video signal of one field at the second field is developed at the output terminal $6_2$ as the second channel signal, and a video signal of one field at the third field is developed at the output terminal $6_3$ as the third channel signal. Since the sampling rate for the signal of each channel is reduced to $\frac{1}{3}$, such signal becomes a video signal of normal speed. Therefore, the colour video signals respectively developed at the output terminals $6_1$, $6_2$ and $6_3$ are substantially equal to the colour video signals derived from a television camera of normal scanning speed. However, in this case, the respective signals developed at the output terminals $6_1$, $6_2$ and $6_3$ are signals of every other 3 fields of the high speed video signals, namely, they are intermittent signals of the order of the fields of the high speed video signals. That is to say, the signal developed at, for example, one of the output terminals is formed of the first field video signal, the fourth field signal, the seventh field signal, the tenth field signal and so on. The video signal itself, however, is exactly equal to a normal video signal.

As described above, according to the circuit shown in Figure 1, the television signals picked up and produced by the high scanning speed television camera are converted in speed to signals having a speed the same as that of the standard television signal and are arranged in parallel to one another over 3 channels.

Therefore, the signal at every parallel channel can be processed in the same way as a signal of normal speed.

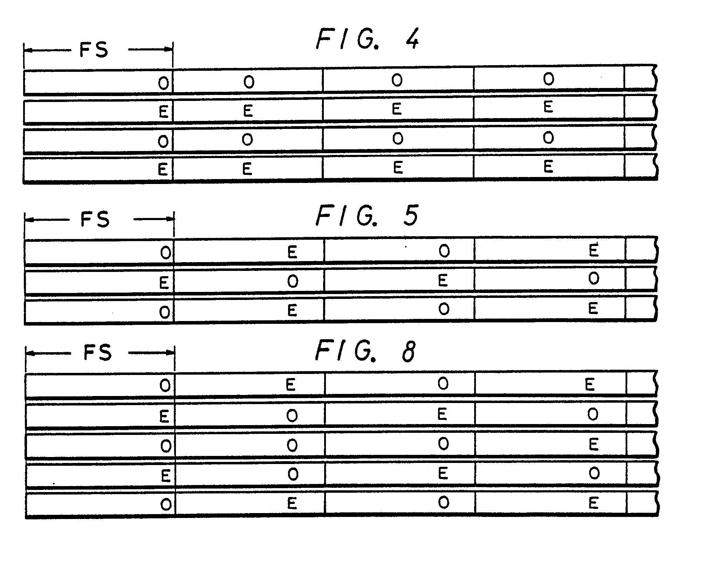

When the scanning speed of the colour video camera 1 is selected to be $N$ times the normal scanning speed, and if the value of $N$ is selected to be odd, the signals developed at the output terminals $6_1$, $6_2$ and $6_3$ of the respective channels are signals in which an odd field O, an even field E, an odd field O and an even field E alternately succeed one another. On the other hand, if the scanning speed of the colour video camera 1 is selected to be an even multiple of the ordinary scanning speed, for example four times the ordinary scanning speed, the output signal of the high speed video signal is produced in parallel at every 4 fields. As a result, as shown in Figure 4, the output signal of each channel obtained during a particular field period FS becomes such that if the first channel, for examplee, is an odd field O, then the second channel is an even field E, the third channel is an odd field O and the fourth channel is an even field E. Also, the output signal during the succeeding field period FS becomes such that the first channel becomes an odd field O, the second channel becomes an even field E, the third channel becomes an odd field O and the fourth channel becomes an even field E, in similar manner. Thus, the video signal of the first channel always becomes an odd field O, the video signal of the second channel always becomes an even field E, and so forth, so that the signal of each channel becomes a signal having a different field interlacing arrangement than that of the ordinary television signal. On the contrary, when the scanning speed of the colour video camera 1 is selected to be an odd multiple of the original or ordinary scanning speed, for example three times the original scanning speed, then, as shown in Figure 5, during a particular field period FS the video signal of the first channel becomes an odd field O, the video signal of the second channel becomes an even field E and the video signal of the third channel becomes an odd field O, while during the succeeding field period FS the video signal of the first channel becomes an even field E, the video signal of the second channel becomes an odd field O and the video signal of the third channel becomes an even field E, so that a signal the same as the interlaced television signal (in which an odd field O, an even field E, an odd field O and an even field E are arranged alternately) is obtained at each channel.

In a colour video signal, in order that dot interference occurring along the scanning lines by the colour subcarrier wave component is made inconspicuous, the frequency of the colour subcarrier wave is selected to have a predetermined relationship to the horizontal frequency. In the case of the NTSC colour video signal, such relationship is selected to satisfy a relationship of $\frac{1}{2}$ line offset and the phase of the colour subcarrier wave relative to the scanning line of each field is repeated at every 4 field periods. In other words, if the phase at the beginning of the first field of a 4 field-unit is taken as 0°, the phase at the beginning of the second field becomes 270°, the phase at the beginning of the third field becomes 180° and the phase at the beginning of the fourth field becomes 90°. Then, at the beginning of the first field of the succeeding 4 field-unit, the phase returns to 0°.

However, the signal of each channel in the 3 parallel channels is not a signal in which the 1st to 4th fields of the high speed video signal are arranged sequentially. On the contrary, as shown in Figures 3 and 5, the order of the 1st to 4th fields is arranged in the order of the 1st, 4th, 3rd and 2nd fields. Consequently, if, in the encoders $5_1$, $5_2$ and $5_3$ of the respective channels, the video signal is directly modulated by the colour difference signal on the basis of the serial colour subcarrier wave, the phases at the beginnings of the 4th and 2nd fields should be 90° and 270° inherently but in fact become 270° and 90° with a phase displacement of 180°, respectively, as shown in Figures 3C, 3G and 3K. Therefore, the colour subcarrier wave to be supplied to each of the encoders $5_1$, $5_2$ and $5_3$ should be inverted in phase in the 4th and 2nd fields. As will be clear from Figures 3 and 5, since, in the signal of each channel, the phase of the colour subcarrier belongs to different fields at the same point in time, in principle, each channel is provided with a circuit which produces a reference colour subcarrier and the reference colour subcarrier of each channel is inverted in phase in every channel at the points in time of the 2nd and 4th fields.

In the above example, the signals of the 3 parallel channels are produced at the output terminals $6_1$, $6_2$ and $6_3$ so as to be delayed by a period of $\frac{1}{3}$ FS ($\frac{1}{3}$ field). Within one field, if the phase of the colour subcarrier at the begining of one field is taken as 0°, the phase of the colour subcarrier becomes 90° at a point in time occurring after $\frac{1}{3}$ of the field has elapsed and 180° at a point in time occurring after another $\frac{1}{3}$ of the field has elapsed. Accordingly, the beginning of the signal in one field of the 2nd channel is delayed by 90° from the beginning of the signal in one field of the 1st channel, as shown in Figures 3F and 3G, while the beginning of the signal in one field of the 3rd channel is delayed by 180° from the beginning of the signal in one field of the 1st channel, as shown in Figures 3J and 3K. Then, as will be clear from Figures 3B, 3C, 3F, 3G, 3J and 3K, the 1st to 4th field signals of the signal in each channel have exactly the same phase relationship relative to the common colour subcarriers, accordingly, of the same phase. Therefore, without preparing a reference colour subcarrier for every channel, only a reference colour subcarrier common to the 3 channels is prepared and then is inverted in phase in every channel at the points in time of the 2nd and 4th fields.

A circuit arrangement which can realise the above techniques is shown in Figure 1. In Figure 1, a reference colour subcarrier generating circuit 71 produces a colour subcarrier of 3.58 MHz. This colour subcarrier of 3.58 MHz, and a signal which results from phase-inverting the colour subcarrier of 3.58 MHz by means of a 180° phase-shifting circuit 72, are both supplied to each of three channel selectors $73_1$, $73_2$ and $73_3$. The selectors $73_1$, $73_2$ and $73_3$ are supplied with respective select signals $SE_1$. $SE_2$ and $SE_3$ (see Figures 3D, 3H and 3L) so that each of the selectors $73_1$, $73_2$ and $73_3$ produces a colour subcarrier from the colour subcarrier generating circuit 71 as it is during the 1st field and 3rd field periods, while each of them produces a colour subcarrier of inverted phase from the phase shifting circuit 72 during the 2nd field and 4th field periods. The colour subcarrier signals from the selectors $73_1$, $73_2$ and $73_3$ are supplied to the (NTSC) channel encoders $5_1$, $5_2$ and $5_3$, respectively, and also to burst signal generating circuits $74_1$, $74_2$ and $74_3$, respectively, which generate burst signals $SB_1$, $SB_2$ and $SB_3$ for the respective channels. The burst signals $SB_1$, $SB_2$ and $SB_3$ are supplied to the encoders $5_1$, $5_2$ and $5_3$, respectively. The operation that takes place in each of the encoders $5_1$, $5_2$ and $5_3$ is of a generally known nature and only the encoder $5_1$ of, for example, the 1st channel will be described. The 1st channel red and blue colour difference signals $R-Y_1$ and $B-Y_1$ from the speed converting circuits 4R and 4B are supplied to balanced modulators 51 and 52, respectively, while the colour subcarrier signal from the selector $73_1$ is supplied through a 90° phase-shifting circuit 53 to the balanced modulator 51 and is supplied directly to the balanced modulator 52 whereby the respective colour subcarriers are balanced-modulated by the red and blue colour difference signals in the balanced modulators 51 and 52. The modulated signals from the balanced modulators 51 and 52 are synthesised or combined by a synthesiser or composer 54 and the synthesised output SC therefrom is supplied through an amplifier 55 to a synthesising or composing circuit 56. The circuit 56 is supplied with the luminance signal $SY_1$, which is derived from an amplifier 57, the burst signal $SB_1$ from the burst signal generating circuit $74_1$, and a synchronising signal SS. As a result, the circuit 56 produces the NTSC colour video signal of the first channel, which is then delivered to the output terminal $6_1$.

Similarly, the NTSC colour video signals of the second and third channels are developed at the output terminals $6_2$ and $6_3$, respectively.

If the signals of the 3 channels are recorded by a special VTR so as to form a pattern of, for example, SMPTE type C format, they can then be reproduced by an ordinary VTR capable of reproducing a tape recorded by such SMPTE type C format, so that a high speed moving object can be reproduced by the ordinary VTR as a picture of a so-called slow motion mode.

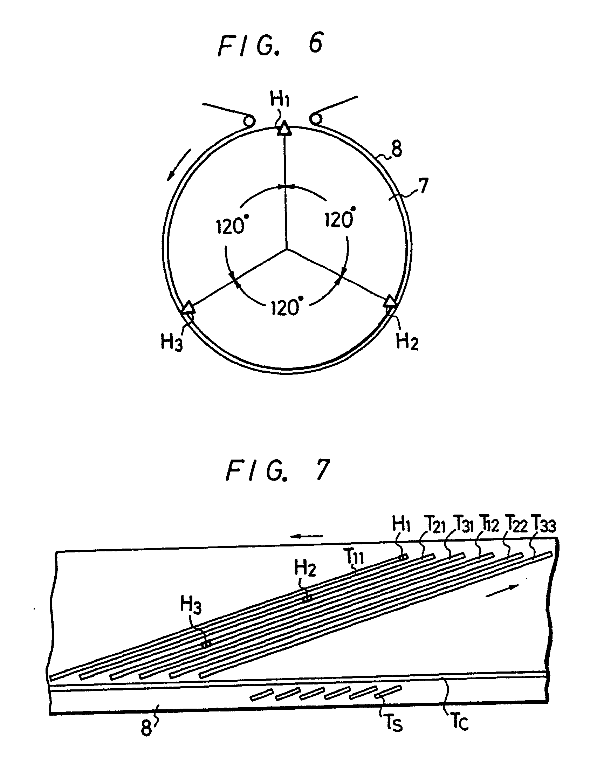

Figure 6 shows an example of a rotary head assembly for the abovementioned special VTR used for recording. Rotary heads corresponding in number to the number of channels, namely three rotary heads $H_1$, $H_2$ and $H_3$ for the case of the exemplary embodiment described above, are mounted to a tape guide drum 7 with an equal angular distance (120° in the case of three heads) therebetween. A tape 8 is wound around the peripheral surface of the tape guide drum 7 over a predetermined angle, for example, 344°, to form an omega shape, whereby the parallel video signals of 3 channels can sequentially be recorded by the three heads $H_1$, $H_2$ and $H_3$.

Since the VTR having such rotary head assembly is to perform a recording operation complying with the SMPTE type C format, the speed of revolution of the rotary heads is selected to have a ratio of one revolution per one field of the NTSC standard television signal, which is the same as that of a VTR capable of recording the signal in the pattern of the ordinary SMPTE type C format. In the present case, however, the tape transportation speed is selected to be three times the original or ordinary tape transportation speed. Since the tape transportation speed is selected to be three times the original tape transportation speed, the angle of inclination of a track relative to the longitudinal direction of the tape would become different from that of the SMPTE type C format in the absence of some measure to prevent this. The different inclination angle can be made coincident with that of the SMPTE type C format by adjusting the angle (the so-called "still angle") at which the tape 8 is wrapped slantwise around the tape guide drum 7.

Figure 7 shows a control signal track Tc formed on the tape 8 and a track Ts on the tape 8 on which a synchronising signal is recorded. Thus, as shown in Figure 7, every three other tracks $T_{11}$, $T_{12}$, $T_{13}$ ... are formed by the head $H_1$, adjacent every three other tracks $T_{21}$, $T_{22}$, $T_{23}$ ... are formed by the head $H_2$ and the remaining every three other tracks $T_{31}$, $T_{32}$, $T_{33}$ ... are formed by the head $H_3$. Since the tape travelling speed is three times the normal tape travelling speed, during the period from the beginning of the tracing by the head $H_1$ to the beginning of the tracing by the head $H_2$, the tape is displaced by one track of the SMPTE type C format. In other words, the pitch of the recorded track becomes identical with that of the SMPTE type C format and becomes exactly coincident with that of the SMPTE type C format.

If the signals provided by frequency modulating the signals of respective channels developed at the output terminals $6_1$, $6_2$ and $6_3$ are recorded by such special VTR, namely a signal provided by frequency modulating the video signal produced at, for example, the terminal $6_1$ is recorded by the head $H_1$, a signal provided by frequency modulating the video signal produced at the terminal $6_2$ is recorded by the head $H_2$, and a signal provided by frequency modulating the video signal produced at the terminal $6_3$ is recorded by the $H_3$, a video signal comprising successive one field amounts is sequently recorded one by one as the tracks $T_{11}$, $T_{21}$, $T_{31}$, $T_{12}$, $T_{22}$, $T_{33}$ ...,. When the signals produced at the output terminals $6_1$, $6_2$ and $6_3$ are recorded by the VTR, each signal is displaced by the angular distance between the heads, namely the period of $\frac{1}{3}$ of the field period FS.

As mentioned before, if a tape thus recorded by the special VTR is reproduced by an ordinary VTR (employing a single rotary head) capable of reproducing a tape recorded by the SMPTE type C format, a picture image with a speed three times the ordinary speed is reproduced with the speed decreased to $\frac{1}{3}$ so that, similarly to the slow motion mode relative to normal speed, a high speed moving object can be reproduced as a picture which can be perceived by the visual sense.

Since the phase of the colour subcarrier signal in the reproduced colour video signal is a correct one complying with each field, it is possible to obtain a reproduced picture having excellent colour properties.

As mentioned before, this invention is not limited to a case in which the scanning speed of the colour video camera 1 is three times the ordinary scanning speed. Particularly when the scanning speed of the colour video camera 1 is selected to be five times the ordinary scanning speed to thereby produce signals of 5 parallel channels, although the arrangement order of the phases of the 1st to 4th fields in each channel are different, the 1st to 4th fields become correct in arrangement. See Figure 8. As a result, in the case where the scanning speed of the colour video camera 1 is five times the normal scanning speed and the number of channels is five, the five colour subcarriers, the phase of each of which is displaced by 360°/5, are prepared for respective channels and then can be supplied directly to the respective channel encoders. In other words, it is sufficient that the colour subcarriers of respective channels have a continuous phase.

The present invention is not limited to the NTSC colour television signal, but can be applied to the signal of, for example, the PAL. (phase alteration by line) system. In the case of the PAL system, the phase of the colour subcarrier must be taken into consideration with the 1st to the 8th fields being taken as a unit.

In the apparatus described above, a high speed video signal picked up by a television camera having a scanning speed N times higher than the scanning speed of the standard television signal can be derived as a normal signal, namely, a signal with the same speed as that of the standard television signal. In addition, the above video signal can be produced in N channels in parallel at every field, and even though the phase of the colour subcarrier is not continuous at each channel, the phase becomes the phase of the colour subcarrier based on the inherent order of fields of the high speed video signal. As a result, if the video signal is recorded by a VTR having the rotary head assembly as, for example, shown in Figure 6, to form the SMPTE type C format, and then is reproduced by an ordinary VTR of single-head type capable of reproducing a tape recorded on the basis of the SMPTE type C format, the colour subcarrier has the correct and continuous phase so that the high speed moving object can be reproduced as a correct colour picture in slow motion mode.

## Claims

1. Video signal generating apparatus, having a video camera (1) which has a higher scanning speed than that of a standard video camera, for generating a prior standard television video signal, the apparatus comprising:

a) means for dividing a video signal from said video camera (1) into a plurality of channel video signals;

b) means (4Y, 4R, 4B) for expanding a time axis of the channel video signals;

c) means ($5_1$, $5_2$, $5_3$) for combining the time axis expanded channel video signals for producing a plurality of composite video signals so that each of the composite video signals has a bandwidth similar to that of the prior standard television video signal; and

d) means for supplying a reference signal to the combining means ($5_1$, $5_2$, $5_3$) so that each of the composite video signals has a colour framing sequence which is the same as that of the prior standard television video signal.

2. Apparatus according to claim 1, in which the time axis expanding means includes an analog-to-digital (A/D) converter (43) for A/D converting the video signal, a plurality of memory circuits

($44_1$, $44_2$, $44_3$) which are controllable by writing and reading address setting circuits (45, 46) to expand the time axis of the A/D-converted video signal, and a plurality of digital-to-analog (D/A) converters ($47_1$, $47_2$, $47_3$) for converting the time axis expanded video signals from the plurality of memory circuits ($44_1$, $44_2$, $44_3$).

3. Apparatus according to claim 1 or claim 2, in which the reference signal is a colour burst signal.

4. Apparatus according to claim 1 or claim 2, in which the reference signal supplying means includes a reference signal generator (71), and a colour burst signal producing circuit ($74_1$, $74_2$, $74_3$) for producing first and second colour burst signals from the reference signal, the first and second colour burst signals having phases opposite to each other and one of said first and second colour burst signals being selectively supplied to the combining means ($5_1$, $5_2$, $5_3$) in response to the scanning speed of the video camera (1).

## Patentansprüche

1. Gerät zur Erzeugung von Videosignalen mit einer Videokamera (1), deren Abtastgeschwindigkeit höher ist als diejenige einer Standard-Videokamera zur Erzeugung eines Vor-Standardfernseh-Videosignals, mit

a) einer Teileinrichtung zum Unterteilen eines Videosignals von der Videokamera (1) in mehrere Kanal-Videosignale,

b) einer Dehneinrichtung (4Y, 4R, 4B) zum Dehnen einer Zeitachse der Kanal-Videosignale,

c) einer Kombiniereinrichtung ($5_1$, $5_2$, $5_3$) zum Kombinieren der zeitachsengedehnten Kanal-Videosignale zum Erzeugen mehrerer Videosignalgemische, derart, daß jedes Videosignalgemisch eine Bandbreite ähnlich derjenigen des Vor-Standardfernseh-Videosignals hat, und

d) einer Zuführeinrichtung zum Zuführen eines Referenzsignals zu der Kombiniereinrichtung ($5_1$, $5_2$, $5_3$), so daß jedes Videosignalgemisch eine Farbteilbildsequenz hat, die dieselbe wie diejenige des Vor-Standardfernseh-Videosignals ist.

2. Gerät nach Anspruch 1, bei dem die Zeitachsen-Dehneinrichtung einen Analog/Digital (A/D)-Umsetzer (43) zum A/D-Umsetzen des Videosignals, mehrere Speicherschaltungen ($44_1$, $44_2$, $44_3$), die durch Schreib- und Leseadressen-Einstellschaltungen (45, 46) steuerbar sind, um die Zeitachse des A/D-umgesetzten Videosignals zu dehnen, und mehrere Digital/Analog (D/A)-Umsetzer ($47_1$, $47_2$, $47_3$) zum Umsetzen der zeitachsengedehnten Videosignale von den mehreren Speicherschaltungen ($44_1$, $44_2$, $44_3$) aufweist.

3. Gerät nach Anspruch 1 oder 2, bei dem das Referenzsignal ein Farbsynchronsignal ist.

4. Gerät nach Anspruch 1 oder 2, bei dem die Zuführeinrichtung zum Zuführen des Referenzsignals einen Referenzsignalgenerator (71) und ein Farbsynchronsignal-Erzeugungsschaltung ($74_1$, $74_2$, $74_3$) zum Erzeugen von ersten und zweiten Farbsynchronsignalen aus dem Referenzsignal aufweist, wobei die ersten und zweiten Farbsynchronsignale zueinander entgegengesetzte Phasen haben und eines der ersten und zweiten Farbsynchronsignale selektiv der Kombinierreinrichtung ($5_1$, $5_2$, $5_3$) abhängig von der Abtastgeschwindigkeit der Videokamera (1) zugeführt wird.

## Revendications

1. Appareil générateur de signaux vidéo, comportant une caméra vidéo (1) qui a une vitesse d'analyse supérieure à celle d'une caméra vidéo standard, pour engendrer un signal vidéo de télévision standard antérieur, l'appareil comprenant:

a) un moyen pour diviser un signal vidéo provenant de la caméra vidéo (1) en un ensemble de signaux vidéo de canaux;

b) un moyen (4Y, 4R, 4B) pour étendre un axe du temps des signaux vidéo de canaux;

c) un moyen ($5_1$, $5_2$, $5_3$) pour combiner les signaux vidéo de canaux à axe du temps étendu afin de produire un ensemble de signaux vidéo complets pour que chacun des signaux vidéo complets ait une largeur de bande semblable à celle du signal vidéo de télévision standard antérieur; et

d) un moyen pour fournir un signal de référence au moyen de combinaison ($5_1$, $5_2$, $5_3$) pour que chacun des signaux vidéo complets comporte une séquence de mise en trames couleur qui soit la même que celle du signal vidéo de télévision standard antérieur.

2. Appareil selon la revendication 1, dans lequel le moyen d'extension de l'axe du temps comprend un convertisseur analogique-numérique (A/N) (43) pour convertir d'analogique en numérique le signal vidéo, un ensemble de circuits de mémoire ($44_1$, $44_2$, $44_3$) pouvant être commandés par des circuits d'établissement d'adresses d'écriture et de lecture (45, 46) pour étendre l'axe du temps du signal vidéo converti de A en N, et un ensemble de convertisseurs numérique-analogique (N/A) ($47_1$, $47_2$, $47_3$) pour convertir les signaux vidéo à axe du temps étendu provenant de l'ensemble des circuits de mémoire ($44_1$, $44_2$, $44_3$).

3. Appareil selon l'une quelconque des revendications 1 et 2, dans lequel le signal de référence est un signal de synchronisation de la sous-porteuse couleur.

4. Appareil selon l'une quelconque des revendications 1 et 2, dans lequel le moyen de fourniture de signal de référence comprend un générateur de signaux de référence (71) et un circuit de production de signaux de synchronisation de sous-porteuse couleur ($74_1$, $74_2$, $74_3$) pour produire des premier et second signaux de synchronisation de sous-porteuse couleur à partir du signal de référence, les premier et second signaux de synchronisation de sous-porteuse couleur ayant des phases opposées entre eux et un des premier et second signaux de synchronisation de sous-porteuse couleur étant fourni sélectivement au moyen de combinaison ($5_1$, $5_2$, $5_3$) en réponse à la vitesse d'analyse de la caméra vidéo (1).

F I G. 1

# FIG. 2

FIG. 3A     (DV)

FIG. 3B

FIG. 3C
FIG. 3D
FIG. 3E     (SE₁)

FIG. 3F

FIG. 3G
FIG. 3H
FIG. 3I     (SE₂)

FIG. 3J

FIG. 3K
FIG. 3L
FIG. 3M     (SE₃)

$44_1$

$44_2$

$44_3$

## FIG. 4

FS

| O | O | O | O |
|---|---|---|---|
| E | E | E | E |
| O | O | O | O |
| E | E | E | E |

## FIG. 5

FS

| O | E | O | E |
|---|---|---|---|
| E | O | E | O |
| O | E | O | E |

## FIG. 8

FS

| O | E | O | E |
|---|---|---|---|
| E | O | E | O |
| O | O | O | E |
| E | O | E | O |
| O | E | O | E |

4

## FIG. 6

## FIG. 7